# EUROPEAN PATENT SPECIFICATION

(11) **EP 3 666 561 B1**
(45) Date of publication and mention of the grant of the patent: **09.03.2022**
(21) Application number: 18211678.0
(22) Date of filing: 11.12.2018
(51) Int. Cl.: B60G 3/20, B60G 3/26, B60G 13/00

(54) **SUSPENSION FOR A STEERABLE WHEEL OF A MOTOR VEHICLE**
AUFHÄNGUNG FÜR EIN LENKBARES RAD EINES KRAFTFAHRZEUGS
SUSPENSION POUR UNE ROUE DIRECTRICE D'UN VÉHICULE AUTOMOBILE

(43) Date of publication of application: 17.06.2020
(73) Proprietor: FCA Italy S.p.A., 10135 Torino (IT)
(72) Inventor: SCANTAMBURLO, Dario, 10135 Torino (IT); GAIDO, Giuseppe, 10135 Torino (IT); PAVESIO, Carlo, 10135 Torino (IT); SANDRI, Silvano, 10135 Torino (IT)
(74) Representative: Notaro, Giancarlo

(56) References cited:
- EP-A1- 0 548 989
- EP-A2- 3 319 821
- WO-A1-2015/107274
- FR-A1- 2 675 431
- JP-A- H02 155 813
- US-A- 4 871 187
- US-A- 5 374 076
- US-B1- 6 481 079

## Description

### Field of the invention

The present invention relates to the suspension for a steerable wheel of a motor-vehicle **having the features indicated in the preamble of claim 1.**

### Prior art

**Document** US5374076A **discloses a suspension for a steerable wheel of a motor-vehicle** of the type indicated above. **Some of those** characteristics are present in suspensions commonly referred to as MacPherson suspensions.

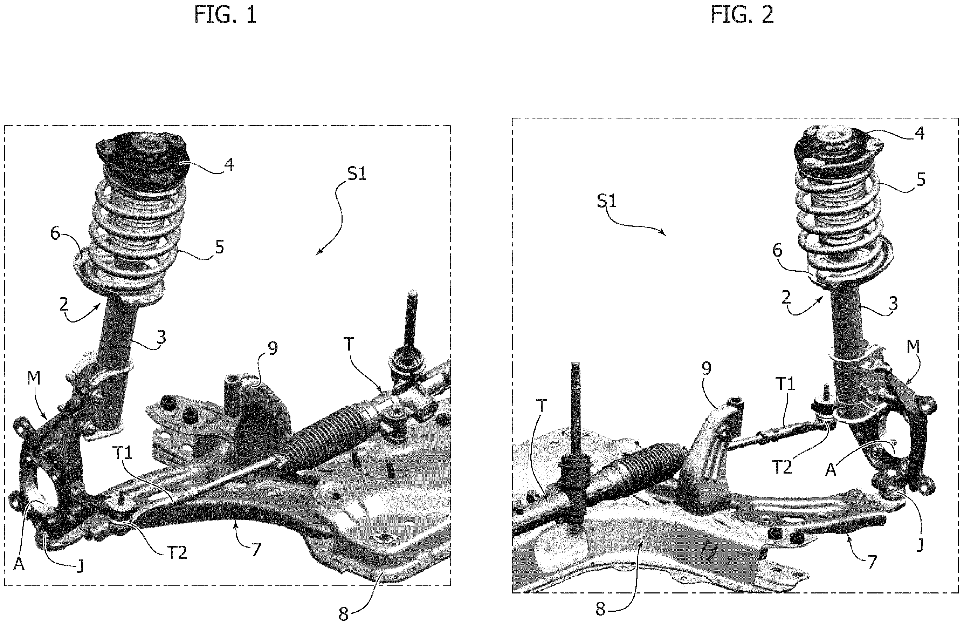

Figures 1 and 2 show perspective views of this type of suspension (indicated in its entirety with the reference S1).

The suspension S1 comprises, for each wheel, a wheel support M on which a wheel pin is rotatably mounted (not shown in the drawings). The wheel support M is provided with a central opening A to allow the passage of a semi-axle, in the case where the wheel associated with the suspension is a drive wheel. Of course, the suspension of Figures 1-2 is also applicable in the case of non-driving steerable wheels.

The wheel support M is connected to the body of the motor-vehicle by means of the structure of a spring-shock absorber assembly 2, including a shock absorber cylinder 3 equipped with a rod. The rod has its upper end connected by means of a first joint to a plate 4 intended to be connected to a portion of the motor-vehicle body.

The body of the spring-shock absorber assembly 2 has its lower end secured to the wheel support M, in such a way that the structure of the spring-shock absorber assembly 2 also serves to guide the movements of the wheel following the loads applied during use of the motor-vehicle.

The spring-shock absorber assembly 2 is associated with a helical spring 5, which is interposed between a plate 6, secured to the body of the spring-shock absorber assembly 2 in a substantially intermediate position, and the plate 4 secured to the body.

The wheel support M of the suspension S1 is also connected to the motor-vehicle structure by means of a lower oscillating arm 7.

The lower oscillating arm 7 has a first end portion that is connected by means of a second joint J to the wheel supports M, in particular at one of its lower ends.

The lower oscillating arm 7 also has a second end portion intended to be connected by means of at least one respective joint to the motor-vehicle structure.

With reference in particular to the solution illustrated in Figures 1 and 2, the lower oscillating arm has a triangular configuration, wherein the aforesaid second end portion is connected by means of two joints to the motor-vehicle structure. More particularly, the lower oscillating arm 7 is connected to an auxiliary frame 8 for supporting suspension elements, arranged to be rigidly connected to the motor-vehicle structure. The auxiliary frame 8 comprises two frame portions 9 in the form of an upright that rise in a vertical direction, for connecting the auxiliary frame 8 to the motor-vehicle body.

The support M is also connected to a steering tie T1 by means of a joint T2. The steering tie rod T1 is connected to a central steering rod T, which is movable in the direction transverse to the longitudinal direction of the motor-vehicle by means of a steering device of any known type which is, in turn, controlled by a steering column driven by the steering wheel of the motor-vehicle.

In the present description, and in the claims that follow, the terms "longitudinal" and "transverse" are used, respectively, with reference to a direction parallel to the longitudinal direction of the motor-vehicle and to a direction transverse to it.

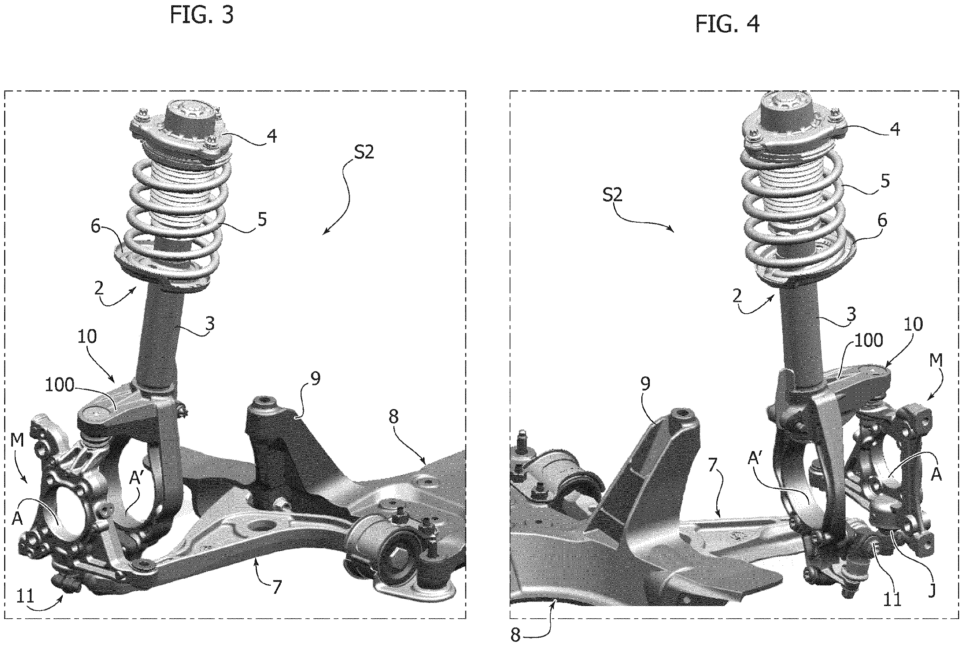

Figures 3, 4 show perspective views of another type of suspension (indicated with S2) for a steerable wheel of a motor-vehicle, also known for a long time.

The parts in common with the suspension diagram S1 are indicated with the same references used in Figures 1, 2. In the suspension diagram illustrated in Figures 3, 4, the steering rod T is not illustrated.

The suspension illustrated in Figures 3, 4, in addition to the wheel support M, the spring-shock absorber assembly 2 and the lower oscillating arm 7, comprises an intermediate support member 10 and an auxiliary arm 11.

More particularly, the lower end of the spring-shock absorber assembly 2 is connected indirectly to the wheel support M, by means of the intermediate support member 10.

The intermediate support member 10 has a shape similar to the wheel support M and is arranged in a more internal position with respect to the motor-vehicle wheel, with reference to the mounted condition of the suspension S2. In a similar manner to the wheel support M, the intermediate support member 10 is provided with a central opening A' to allow the passage of a semi-axle, in the case where the wheel associated with the suspension is a drive wheel.

The intermediate support member 10 has an upper portion 100 shaped like an arm extending in a transverse direction.

In order to produce the indirect connection between the support M and the spring-shock absorber assembly 2, a first end of the upper portion 100 of the intermediate support member 10 is articulated connected to an upper portion of the wheel support M, while a second end of the upper portion 100 of the intermediate support member 10 is secured at the lower end of the cylinder 3 of the spring-shock absorber assembly 2.

As stated previously, the suspension diagram S2 illustrated in Figures 3 and 4 also includes an auxiliary arm 11. The auxiliary arm 11 is connected, at its opposite ends, to a lower portion of the wheel support M and to a lower portion of the intermediate support member 10. As illustrated in particular in Figure 4, the auxiliary arm 11 is also connected, at an intermediate portion thereof, to the first end portion of the lower oscillating arm 7.

Compared to the MacPherson suspension described in Figures 1, 2, the suspension diagram S2 illustrated in Figures 3, 4 has the advantage of having a steering axis that does not pass through the upper joint of the spring-shock absorber assembly, but is maintained spaced apart from this, being defined by the two joints that connect the wheel support to the lower oscillating arm 7 and to the intermediate support member 10. Thanks to this characteristic, it is possible to vary, during the design phase, the distance between the steering axis and the axle of the spring-shock absorber assembly according to the motor-vehicle model on which the suspension is mounted, allowing optimization of suspension performance on one hand, and greater flexibility in the vehicle design.

However, there is a need to further improve the aforesaid known suspension, also from the point of view of simplifying components and reducing the weight.

### Object of the invention

The object of the present invention is to provide a suspension for a steerable wheel of a motor-vehicle which, on the one hand overcomes the drawbacks of a MacPherson suspension, similar to the additional known solution described above, but which - on the other hand - is even more advantageous in terms of suspension performance, constructive simplicity, weight reduction and reduction of production costs.

Another object of the invention is to provide a suspension that allows maximum freedom to the designer for adapting the suspension to each specific model of a motor-vehicle.

Another object of the invention is to provide a suspension that can also be adapted to vehicles originally designed to have conventional suspension systems, without requiring significant modifications to the vehicle structure.

Another object is to provide a suspension which can be easily implemented with simple and low-cost means in order to allow adjustment of one or more parameters of the suspension, such as, for example, the wheel camber, or the height of the rolling center of the vehicle.

### Summary of the invention

In view of achieving these objects, the invention relates to a suspension having all the characteristics indicated **in claim 1.**

Preferably, the upper oscillating arm has a forked body with two arms extending from said first end of the upper oscillating arm, and terminating with end portions provided with respective joints for connecting to the motor-vehicle structure.

Still according to a preferred characteristic of the invention, the upright frame portion to which the upper oscillating arm is connected in an articulated manner may be defined by a separate auxiliary element, rigidly connected to the upright frame portion by means of connecting means configured to release the connection in the event of a collision.

Thanks to the characteristics indicated above, the suspension for a steerable wheel of a motor-vehicle according to the present invention offers the following advantages:
- it has a steering axis that does not pass through the upper joint of the spring-shock absorber assembly;
- it can be adapted to vehicles originally designed to have conventional suspension systems, without requiring significant modifications to the vehicle structure;
- it allows optimization of suspension performance and greater flexibility in vehicle design;
- it provides a suspension that can be easily implemented with simple and low-cost means in order to allow adjustment of one or more parameters of the suspension, such as, for example, the wheel camber, or the height of the rolling center of the vehicle.

### Description of a preferred embodiment

Further characteristics and advantages of the invention will become apparent from the description that follows with reference to the attached drawings, provided purely by way of non-limiting example, wherein:
- Figures 1 and 2, already described above, are two perspective views of a suspension for a steerable wheel of a MacPherson-type motor-vehicle, known and considered here,
- Figures 3 and 4, also already described above, are perspective views of a further suspension diagram according to the prior art,

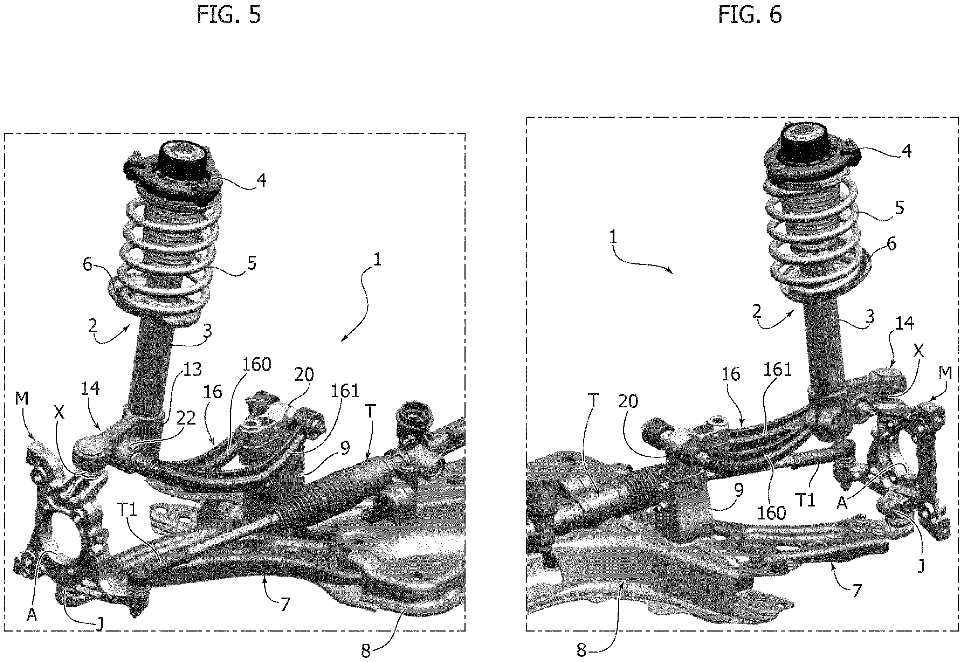

- Figures 5 and 6 show perspective views of the suspension according to the invention,

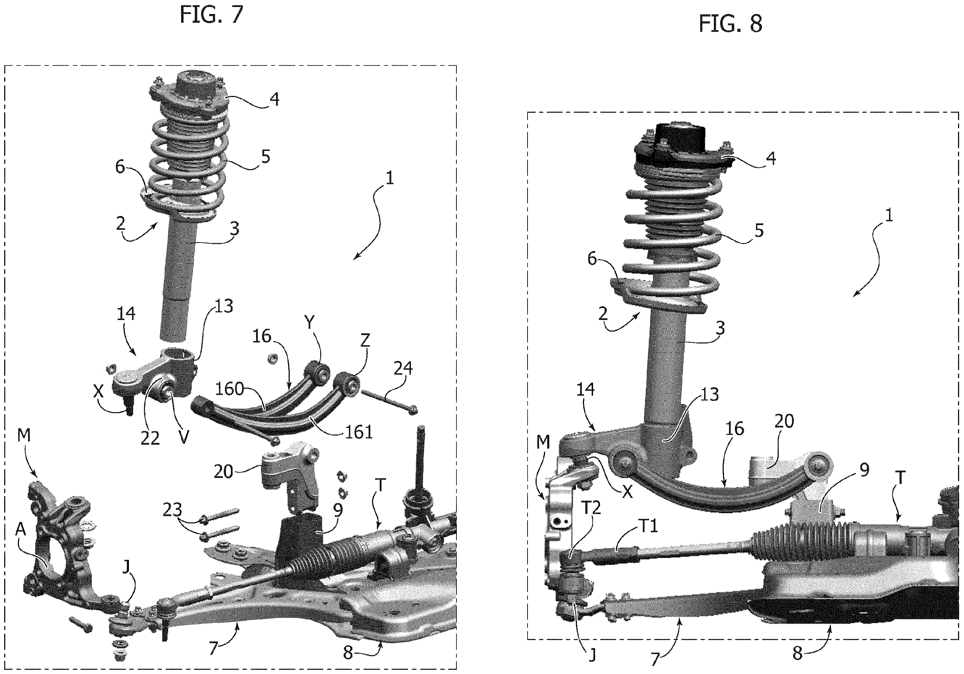

- Figure 7 illustrates an exploded perspective view of the components shown in Figure 5, and
- Figure 8 illustrates a side view of the suspension shown in Figures 5-6.

In the following description, various specific details are illustrated, which are aimed at a thorough understanding of the embodiments. The embodiments can be implemented without one or more of the specific details, or with other methods, components, materials, etc. In other cases, structures, constructive details, materials or known operations are not illustrated and described in detail, since they can be produced in any known way, and also because they do not fall within the scope of the present invention.

Figures 5-8 illustrate a preferred embodiment of a suspension according to the present invention. In Figures 5-8, the various parts in common with the suspensions previously described are indicated with the same references used in Figures 1-4.

Reference 1 indicates, in general, a steerable wheel suspension of a motor-vehicle according to the invention.

In exactly the same manner as the suspension described in Figures 1-2, the suspension according to the invention comprises a wheel upright M, a spring-shock absorber assembly 2, and a lower oscillating arm 7. The lower oscillating arm 7 is connected to the wheel upright M and to the motor-vehicle structure in the same way as the MacPherson suspension described above and illustrated in Figures 1-2.

According to a first essential characteristic of the present invention, the lower end of the spring-shock absorber assembly 2 is indirectly connected to the wheel upright M by means of an intermediate arm 14.

The intermediate arm 14 is rigidly connected to the lower end of the spring-shock absorber assembly 2 (for example, by welding and/or mechanical connection), and is articulated connected to an upper portion of the wheel upright M, by means of a third joint connection X.

According to the preferred embodiment illustrated in the drawings, the intermediate arm 14 comprises a one-piece body including a first end configured with a through-cavity with a substantially vertical axis for receiving the spherical joint X for connecting to the wheel upright M. The intermediate arm 14 also has a second end configured as a tube 13 with a substantially vertical axis that defines a cavity within which the cylindrical body 3 of the spring-shock absorber assembly 2 is secured (Figure 7).

According to another essential characteristic of the invention, the suspension S3 also comprises an upper oscillating arm 16 connected at respective opposite ends to the aforesaid intermediate arm 14 and to the motor-vehicle structure.

More specifically, the upper oscillating arm 16 comprises a first end portion connected by means of a fourth joint V to the intermediate arm 14 (Figure 7). With reference in particular to the exploded perspective view of Figure 7, the intermediate arm 14 comprises a body which connects the ends (described above) together, from which a tube portion 22 projects that defines a cylindrical cavity with an axis substantially parallel to a longitudinal direction of the motor-vehicle, with reference to the mounted condition of the suspension on the motor-vehicle.

The tube portion 22, which defines a cylindrical cavity, is configured to receive the fourth joint V therein (for example, in the form of an elastic bushing) for the articulated connection to one end of the upper oscillating arm 16.

Preferably, the connection between the intermediate arm 14 and the first end portion of the upper oscillating arm 16 is made in a portion of the intermediate arm 14 that is intermediate between the spring-shock absorber assembly and the wheel upright M (Figure 8).

As previously stated, the upper oscillating arm 16 is also connected, in addition to the intermediate arm 14, to the structure of the motor-vehicle. More particularly, the upper oscillating arm 16 comprises a second end portion which is configured to be connected to the motor-vehicle structure by at least one respective joint.

With reference in particular to Figures 5, 6 and 8, the upper oscillating arm 16 has a triangular configuration that defines a first end connected by means of the fourth joint V to the intermediate arm 14 and, on the opposite side, two end portions provided with two respective joints Y and Z for connection to the motor-vehicle structure. The joints Y, Z are spaced apart from each other in the longitudinal direction of the motor-vehicle, with reference to the mounted condition of the suspension 1 on the motor-vehicle.

In accordance with the embodiment illustrated in the drawings, the triangular configuration of the upper oscillating arm 16 is made by a forked body having two arms 160, 161 extending from the first end of the upper oscillating arm 16 connected to the intermediate arm 14. The two arms 160, 161 of the forked body of the upper oscillating arm 16 terminate with end portions provided with respective joints Y, Z for connection to the motor-vehicle structure.

With reference in particular to the exploded view of Figure 7, the first end portion of the upper oscillating arm 16 is articulated to the intermediate arm 14 by means of a first elastic bushing V with an axis substantially parallel to a longitudinal direction of the motor-vehicle. In a completely similar manner, the joints Y, Z for connecting the end portions of the upper oscillating arm 16 to the motor-vehicle structure comprise two elastic bushings that have respective main axes coincident with each other and substantially parallel to the axis of the aforesaid first elastic bushing.

The second end portions of the lower and upper oscillating arms are connected by means of the respective joints Y, Z to an auxiliary frame 8. As known and described above with reference to Figures 1-4, the auxiliary frame 8 is arranged to support elements of the suspension, and to be rigidly connected to the structure of the motor-vehicle. In particular with reference to the embodiment illustrated in the drawings, the second end portion of the upper oscillating arm 16 is articulated connected to an upper end of a portion of an uprightframe 9.

According to a further preferred characteristic, the second end portion of the upper oscillating arm 16 is connected to the upper end of the upright frame portion 9 by means of an adjusting device, configured to allow variation of the relative position of the second end portion of the upper oscillating arm 16 with respect to the vehicle structure, with the consequent possibility of varying the wheel camber angle of the wheel. This adjusting device can be of any known type, for example, a rotating cam device.

Preferably, the upper upright portion 9, to which the upper oscillating arm 16 is connected, is defined by a separate auxiliary element 20, rigidly connected to the upright frame portion 9 by means of connecting means 23 configured to release the connection in the event of a collision of the motor-vehicle (Figure 7).

The suspension for a steerable wheel of a motor-vehicle according to the present invention offers the following advantages:
- it has a steering axis that does not pass through the upper joint of the spring-shock absorber assembly;
- it allows optimization of suspension performance and greater flexibility in vehicle design;
- it can be adapted to vehicles originally designed to have conventional suspension systems, without requiring significant modifications to the vehicle structure.
- it provides a suspension which can be easily implemented with simple and low-cost means in order to allow adjustment of one or more parameters of the suspension, such as, for example, the wheel camber, or the height of the rolling center of the vehicle.

Of course, without prejudice to the principle of the invention, the details of construction and the embodiments may vary widely with respect to those described and illustrated purely by way of example, without departing from the scope of the present invention defined by the claims.

## Claims

1. A suspension for a steerable wheel of a motor-vehicle, comprising:
- a wheel upright (M),
- a spring-shock absorber assembly (2) having an upper end provided with a first joint for articulated connection to the structure of the motor-vehicle, and a lower end connected to the wheel upright (M),
- a lower oscillating arm (7) having a first end portion connected by means of a second joint (J) to the wheel upright (M) and a second end portion intended to be connected by means of at least one respective joint to the motor-vehicle structure,
- wherein the lower end of the spring-shock absorber assembly is indirectly connected to the wheel upright (M), by means of an intermediate arm (14) rigidly connected to the lower end of the spring-shock absorber assembly (2), and articulated connected to an upper portion of the wheel upright (M), by means of a third connection joint (X),
- said suspension (1) comprising also an upper oscillating arm (16) having a first end portion connected by means of a fourth joint (V) to said intermediate arm (14), in a portion thereof which is in an intermediate position between the spring-shock absorber assembly (2) and the wheel upright, said upper oscillating arm (16) having a second end portion intended to be connected by means of at least one respective joint (Y, Z) to the motor-vehicle structure,
- said suspension (1) comprising also an auxiliary frame (8) for supporting elements of the suspension (1), arranged to be rigidly connected to the structure of the motor-vehicle, wherein said second end portions of the lower oscillating arm (7) and of the upper oscillating arm (16) are connected by means of said respective joints to said auxiliary frame,
- said auxiliary frame (8) comprising a frame portion in the form of an upright (9), which rises in a vertical direction, said second end portion of the upper oscillating arm (16) being articulated connected to an upper end of said upright frame portion (9),
said suspension (1) being **characterized in that**:
- said upper oscillating arm (16) has a triangular configuration, with a first end connected by means of said fourth joint (V) to said intermediate arm (14) and, on the opposite side, two end portions provided with two respective joints (Y, Z) for connection to the auxiliary frame (8), said joints (Y, Z) being spaced apart from each other in the longitudinal direction of the motor-vehicle, with reference to the mounted condition of the suspension (1) on the motor-vehicle,
- said frame portion in the form of an upright (9) is also provided to connect the auxiliary frame (8) to the motor-vehicle body.

2. A suspension (1) according to claim 1, **characterized in that** said upper oscillating arm (16) has a forked-shaped body with two arms (160, 161) extending from said first end of the upper oscillating arm (16) and terminating with end portions provided with respective joints (Y, Z) for connecting to the motor-vehicle structure.

3. A suspension (1) according to claim 1, **characterized in that** said first end portion of the upper oscillating arm (16) is articulated to the intermediate arm (14) by means of a first elastic bushing (V) with an axis substantially parallel to a longitudinal direction of the motor-vehicle, with reference to the mounted condition of the suspension on the motor-vehicle.

4. A suspension according to claim 3, **characterized in that** the joints (Y, Z) for connecting said end portions of the upper oscillating arm (16) to the motor-vehicle structure comprise two elastic bushings having respective main axes coincident with each other and substantially parallel to the axis of said first elastic bushing (V).

5. A suspension (1) according to claim 1, **characterized in that** the upper end of the upright frame portion (9) to which said second end portion of the upper oscillating arm (16) is connected - in a jointed manner - is defined by a separate auxiliary element (20), rigidly connected to the upright frame portion (9) by connecting means (23) configured to release the connection in the event of a collision.

6. A suspension according to claim 1, **characterized in that** said third connection joint (X) is a spherical joint.

7. A suspension (1) according to claim 1, **characterized in that** said intermediate arm (14) comprises a one-piece body with a first end configured with a through-cavity with a substantially vertical axis, to receive the body of a spherical joint for connecting to the wheel upright (M), a second end configured as a tube (13) with a substantially vertical axis, defining a cavity within which a cylindrical body (3) of said spring-shock absorber assembly (2) is secured, and a body which connects said ends to each other, from which a tube portion (22) protrudes, defining a cylindrical cavity with an axis substantially parallel to a longitudinal direction of the motor-vehicle, with reference to the mounted condition of the suspension (1) on the motor-vehicle, said cylindrical cavity receiving an elastic bushing (V) therein, for articulated connection to the first end of the upper oscillating arm (16).

8. A suspension (1) according to claim 1, **characterized in that** said second end portion of the upper oscillating arm (16) is articulated connected to the upper end of the upright frame portion (9) by means of an adjusting device, configured to allow variation of the relative position of the second end portion of the upper oscillating arm (16) with respect to the vehicle structure, with the consequent possibility of varying the camber angle of the wheel.

9. A motor-vehicle comprising a suspension (1) according to any one of the preceding claims.

## Patentansprüche

1. Aufhängung für ein lenkbares Rad eines Kraftfahrzeugs, umfassend:
- einen Radträger (M),
- eine Federstoßdämpferanordnung (2) mit einem oberen Ende, das mit einem ersten Gelenk zur gelenkigen Verbindung mit der Struktur des Kraftfahrzeugs versehen ist, und einem unteren Ende, das mit dem Radträger (M) verbunden ist,
- einen unteren Schwingarm (7) mit einem ersten Endabschnitt, der durch ein zweites Gelenk (J) mit dem Radträger (M) verbunden ist, und einem zweiten Endabschnitt, der dazu vorgesehen ist, über mindestens ein entsprechendes Gelenk mit der Kraftfahrzeugstruktur verbunden zu werden,
- wobei das untere Ende der Federstoßdämpferanordnung mit dem Radträger (M) durch einen Zwischenarm (14) indirekt verbunden ist, welcher mit dem unteren Ende der Federstoßdämpferanordnung (2) starr verbunden ist, und mit einem oberen Abschnitt des Radträgers (M) durch ein drittes Verbindungsgelenk (X) gelenkig verbunden ist,
- wobei die Aufhängung (1) ferner einen oberen Schwingarm (16) umfasst, welcher einen ersten Endabschnitt aufweist, welcher durch ein viertes Gelenk (V) mit dem Zwischenarm (14) in einem Abschnitt desselben, welcher eine Zwischenposition zwischen der Federstoßdämpferanordnung (2) und dem Radträger (M) ist, verbunden ist, wobei der obere Schwingarm (16) einen zweiten Endabschnitt umfasst, der dazu vorgesehen ist mit der Kraftfahrzeugstruktur durch zumindest ein entsprechendes Gelenk (Y, Z) verbunden zu werden,
- wobei die Aufhängung ferner einen Hilfsrahmen (8) zum Tragen von Elementen der Aufhängung (1) umfasst, welcher zum starren Verbinden mit der Struktur des Kraftfahrzeugs angeordnet ist, wobei die zweiten Endabschnitte des unteren Schwingarms (7) und des oberen Schwingarms (17) durch die entsprechenden Gelenke mit dem Hilfsrahmen verbunden sind,
- wobei der Hilfsrahmen (8) einen Rahmenabschnitt in Form eines Trägers (9) umfasst, welcher sich in einer vertikalen Richtung erhebt, wobei der zweite Endabschnitt des oberen Schwingarms (16) mit einem oberen Ende des Träger-Rahmenabschnitts (9) gelenkig verbunden ist,
wobei die Aufhängung (1) **dadurch gekennzeichnet ist, dass**:
- der obere Schwingarm (16) eine dreieckige Konfiguration aufweist, wobei ein erstes Ende durch das vierte Gelenk (V) mit dem Zwischenarm (14) verbunden ist, und, auf der gegenüberliegenden Seite, zwei Endabschnitte mit zwei entsprechenden Gelenken (Y, Z) zur Verbindung mit dem Hilfsrahmen (8) vorgesehen sind, wobei die Gelenke (Y, Z) voneinander in der Längsrichtung des Kraftfahrzeugs bezüglich des montierten Zustands der Aufhängung (1) an dem Kraftfahrzeug beabstandet sind,
- wobei der Rahmenabschnitt in Form eines Trägers (9) ferner zum Verbinden des Hilfsrahmens (8) mit dem Kraftfahrzeugkörper vorgesehen ist.

2. Aufhängung (1) nach Anspruch 1, **gekennzeichnet dadurch, dass** der obere Schwingarm (16) einen gabelförmigen Körper mit zwei Armen (160, 161) aufweist, welche sich von dem ersten Ende des oberen Schwingarms (16) erstrecken und mit Endabschnitten abschließen, welche mit entsprechenden Gelenken (Y, Z) zum Verbinden mit der Kraftfahrzeugstruktur versehen sind.

3. Aufhängung (1) nach Anspruch 1, **gekennzeichnet dadurch, dass** der erste Endabschnitt des oberen Schwingarms (16) an den Zwischenarm (14) durch eine erste elastische Buchse (V) mit einer im Wesentlichen zur Längsrichtung des Kraftfahrzeugs parallelen Achse bezüglich des montierten Zustands der Aufhängung (1) an dem Kraftfahrzeug gelenkbildend angeordnet ist.

4. Aufhängung nach Anspruch 3, **gekennzeichnet dadurch, dass** die Gelenke (Y, Z) zum Verbinden der Endabschnitte des oberen Schwingarms (16) mit der Kraftfahrzeugstruktur zwei elastische Buchsen umfassen, welche entsprechende miteinander übereinstimmende und im Wesentlichen zur Achse der ersten elastischen Buchse (V) parallele Hauptachsen aufweisen.

5. Aufhängung (1) nach Anspruch 1, **dadurch gekennzeichnet, dass** das obere Ende des Träger-Rahmenabschnitts (9), mit welchem der zweite Endabschnitt des oberen Schwingarms (16) - in gelenkiger Weise - verbunden ist, durch ein separates Hilfselement (20) definiert ist, welches mit dem Träger-Rahmenabschnitt (9) durch Verbindungsmittel (23) starr verbunden ist, welche ausgebildet sind, die Verbindung im Falle einer Kollision zu lösen.

6. Aufhängung nach Anspruch 1, **dadurch gekennzeichnet, dass** das dritte Verbindungsgelenk (X) ein Kugelgelenk ist.

7. Aufhängung (1) nach Anspruch 1, **dadurch gekennzeichnet, dass** der Zwischenarm (14) einen einteiligen Körper mit einem ersten Ende, welches mit einer Durchgangskavität mit einer im Wesentlichen vertikalen Achse ausgebildet ist, um den Körper eines Kugelgelenks zur Verbindung mit dem Radträger (M) zu empfangen, ein zweites Ende, welches als Rohr (13) mit einer im Wesentlichen vertikalen Achse ausgebildet ist, wodurch eine Kavität, innerhalb welcher ein zylindrischer Körper (3) der Federstoßdämpferanordnung (2) befestigt ist, definiert ist, und einen die Enden miteinander verbindenden Körper umfasst, von welchem ein Rohrabschnitt (22) herausragt, wodurch eine zylindrische Kavität mit einer im Wesentlichen zu einer Längsrichtung des Kraftfahrzeuges parallelen Achse bezüglich des montierten Zustands der Aufhängung (1) an dem Kraftfahrzeug definiert ist, wobei die zylindrische Kavität darin eine elastische Buchse (V) zur Gelenkverbindung mit dem ersten Ende des oberen Schwingarms (16) empfängt.

8. Aufhängung (1) nach Anspruch 1, **dadurch gekennzeichnet, dass** der zweite Endabschnitt des oberen Schwingarms (16) mit dem oberen Ende des Träger-Rahmenabschnitts (9) durch eine Einstellvorrichtung gelenkig verbunden ist, welche ausgebildet ist, eine Variation der relativen Position des zweiten Endabschnitts des oberen Schwingarms (16) hinsichtlich der Fahrzeugstruktur, mit der daraus resultierenden Möglichkeit den Sturzwinkel des Rads zu variieren, zu erlauben.

9. Kraftfahrzeug umfassend eine Aufhängung (1) nach einem der vorhergehenden Ansprüche.

## Revendications

1. Suspension pour une roue directrice d'un véhicule automobile, comprenant :
- un montant de roue (M),
- un ensemble ressort-amortisseur (2) ayant une extrémité supérieure munie d'un premier joint pour une liaison articulée à la structure du véhicule automobile, et une extrémité inférieure reliée au montant de roue (M),
- un bras oscillant inférieur (7) ayant une première partie d'extrémité reliée au moyen d'un deuxième joint (J) au montant de roue (M) et une deuxième partie d'extrémité destinée à être reliée au moyen d'au moins un joint respectif à la structure de véhicule automobile,
- dans laquelle l'extrémité inférieure de l'ensemble ressort-amortisseur est indirectement reliée au montant de roue (M), au moyen d'un bras intermédiaire (14) relié de manière rigide à l'extrémité inférieure de l'ensemble ressort-amortisseur (2), et relié de manière articulée à une partie supérieure du montant de roue (M), au moyen d'un troisième joint de liaison (X),
- ladite suspension (1) comprenant également un bras oscillant supérieur (16) ayant une première partie d'extrémité reliée au moyen d'un quatrième joint (V) audit bras intermédiaire (14), dans une partie de celui-ci qui est dans une position intermédiaire entre l'ensemble ressort-amortisseur (2) et le montant de roue, ledit bras oscillant supérieur (16) ayant une deuxième partie d'extrémité destinée à être reliée au moyen d'au moins un joint respectif (Y, Z) à la structure de véhicule automobile,
- ladite suspension (1) comprenant également un châssis auxiliaire (8) pour supporter des éléments de la suspension (1), agencé pour être relié de manière rigide à la structure du véhicule automobile, où lesdites deuxièmes parties d'extrémité du bras oscillant inférieur (7) et du bras oscillant supérieur (16) sont reliées au moyen desdits joints respectifs audit châssis auxiliaire,
- ledit châssis auxiliaire (8) comprenant une partie de châssis en forme de montant (9), qui s'élève dans une direction verticale, ladite deuxième partie d'extrémité du bras oscillant supérieur (16) étant reliée de manière articulée à une extrémité supérieure de ladite partie de châssis formant montant (9),
ladite suspension (1) étant **caractérisée en ce que** :
- ledit bras oscillant supérieur (16) a une configuration triangulaire, avec une première extrémité reliée au moyen dudit quatrième joint (V) audit bras intermédiaire (14) et, du côté opposé, deux parties d'extrémité munies de deux joints respectifs (Y, Z) pour une liaison au châssis auxiliaire (8), lesdits joints (Y, Z) étant espacés l'un de l'autre dans la direction longitudinale du véhicule automobile, en référence à l'état monté de la suspension (1) sur le véhicule automobile,
- ladite partie de châssis en forme de montant (9) est également prévue pour relier le châssis auxiliaire (8) à la carrosserie de véhicule automobile.

2. Suspension (1) selon la revendication 1, **caractérisée en ce que** ledit bras oscillant supérieur (16) a un corps en forme de fourche avec deux bras (160, 161) s'étendant depuis ladite première extrémité du bras oscillant supérieur (16) et se terminant par des parties d'extrémité munies de joints respectifs (Y, Z) pour une liaison à la structure de véhicule automobile.

3. Suspension (1) selon la revendication 1, **caractérisée en ce que** ladite première partie d'extrémité du bras oscillant supérieur (16) est articulée au bras intermédiaire (14) au moyen d'une première douille élastique (V) ayant un axe sensiblement parallèle à une direction longitudinale du véhicule automobile, en référence à l'état monté de la suspension sur le véhicule automobile.

4. Suspension selon la revendication 3, **caractérisée en ce que** les joints (Y, Z) pour une liaison desdites parties d'extrémité du bras oscillant supérieur (16) à la structure de véhicule automobile comprennent deux douilles élastiques ayant des axes principaux respectifs qui coïncident l'un avec l'autre et sensiblement parallèles à l'axe de ladite première douille élastique (V).

5. Suspension (1) selon la revendication 1, **caractérisée en ce que** l'extrémité supérieure de la partie de châssis formant montant (9) à laquelle ladite deuxième partie d'extrémité du bras oscillant supérieur (16) est reliée - de manière articulée - est définie par un élément auxiliaire séparé (20), relié de manière rigide à la partie de châssis formant montant (9) par un moyen de liaison (23) configuré pour libérer la liaison dans le cas d'une collision.

6. Suspension selon la revendication 1, **caractérisée en ce que** ledit troisième joint de liaison (X) est un joint sphérique.

7. Suspension (1) selon la revendication 1, **caractérisée en ce que** ledit bras intermédiaire (14) comprend un corps monobloc avec une première extrémité configurée avec une cavité traversante ayant un axe sensiblement vertical, pour recevoir le corps d'un joint sphérique pour une liaison au montant de roue (M), une deuxième extrémité configurée comme un tube (13) ayant un axe sensiblement vertical, définissant une cavité à l'intérieur de laquelle un corps cylindrique (3) dudit ensemble ressort-amortisseur (2) est fixé, et un corps qui relie lesdites extrémités les unes aux autres, à partir duquel une partie de tube (22) fait saillie, définissant une cavité cylindrique ayant un axe sensiblement parallèle à une direction longitudinale du véhicule automobile, en référence à l'état monté de la suspension (1) sur le véhicule automobile, ladite cavité cylindrique recevant en son sein une douille élastique (V), pour une liaison articulée à la première extrémité du bras oscillant supérieur (16).

8. Suspension (1) selon la revendication 1, **caractérisée en ce que** ladite deuxième partie d'extrémité du bras oscillant supérieur (16) est reliée de manière articulée à l'extrémité supérieure de la partie de châssis formant montant (9) au moyen d'un dispositif de réglage, configuré pour permettre la variation de la position relative de la deuxième partie d'extrémité du bras oscillant supérieur (16) par rapport à la structure de véhicule, avec la possibilité conséquente de faire varier l'angle de carrossage de la roue.

9. Véhicule automobile comprenant une suspension (1) selon l'une quelconque des revendications précédentes.
